# EUROPÄISCHE PATENTANMELDUNG

(11) **EP 4 825 748 A1**
(43) Veröffentlichungstag der Anmeldung: **21.10.2026**
(21) Anmeldenummer: 26167915.3
(22) Anmeldetag: 26.03.2026
(51) Int. Cl.: B65D 21/032

(54) **BEHÄLTERANORDNUNG UND VERFAHREN ZU DEREN HERSTELLUNG**

(30) Priorität: 17.04.2025 DE 102025115137
(71) Anmelder: Variotech GmbH, 48529 Nordhorn (DE)
(72) Erfinder: FLEIG, Benedikt, 50259 Pulheim (DE); ZEITEL, Eric, 49828 Neuenhaus (DE); GERIG, Volkhard, 48529 Nordhorn (DE)
(74) Vertreter: Liedtke & Partner Patentanwälte

(57) **Zusammenfassung**

Die Erfindung betrifft eine Behälteranordnung (1), aufweisend eine Anzahl von Behältern (2) und einen Behälterverschlussdeckel (3), wobei der jeweilige Behälter (2) einen Behälterboden (4) aufweist, an den sich umlaufend eine Seitenwand (5) anschließt, die in einem oberen Bereich umlaufend einen oberen Stapelrand (6) und in einem unteren Bereich umlaufend einen unteren Stapelrand (7) aufweist, wobei in der Seitenwand (5) ein Druckausgleichselement (8) mit einer Nässesperrmembran angeordnet ist, wobei an dem unteren Stapelrand (7) umlaufend eine Behälterdichtung (9) angeordnet ist und wobei an dem Behälterverschlussdeckel (3) umlaufend eine Deckeldichtung (10) angeordnet ist.

Des Weiteren betrifft die Erfindung ein Verfahren zur Herstellung der Behälteranordnung (1).

## Beschreibung

Die Erfindung betrifft eine Behälteranordnung und ein Verfahren zu deren Herstellung.

Aus der DE 199 64 255 C2 ist ein Transportbehälter aus Kunststoff mit einem Boden und einer materialeinheitlich mit dem Boden ausgebildeten, umlaufenden Seitenwand sowie über eine Außenkontur der Seitenwand um die gesamte Behälteraußenseite umlaufend vorstehenden Flanschen bekannt. Die Flansche schließen an ihrer Unterseite mit der Seitenwand einen Winkel ein, der kleiner als 90 ° ist, und sind als nach innen offene Nut ausgebildet.

Weiterhin ist aus der DE 199 27 069 C2 ein als Tiefziehkunststoffteil ausgebildeter Transportbehälter aus Kunststoff mit einem Boden und einer materialeinheitlich mit dem Boden ausgebildeten, umlaufenden Seitenwand bekannt. Der Transportbehälter umfasst einen über eine Außenkontur der Seitenwand um eine gesamte Behälteraußenseite umlaufend vorstehenden, als Hohlprofil ausgebildeten Flansch. Der Flansch ist zu einer Behälterinnenseite hin nach innen als offene Nut ausgebildet und vom Boden beabstandet angeordnet. Eine sich nach unten an den Flansch anschließende Seitenwand ist mindestens um eine Wandstärke der Seitenwand zurückversetzt und der Flansch schließt an seiner Unterseite mit der Seitenwand einen Winkel ein, der kleiner als 90 ° ist. Am oberen Randbereich der Seitenwand ist ein einfacher umlaufender Flansch vorgesehen, welcher an seiner Unterseite mit der Außenwand einen Winkel einschließt, der kleiner als 90 ° ist.

Zudem sind aus der DE 10 2019 207 818 A1 ein Werkzeug und ein Verfahren zur Herstellung eines Behälters aus Kunststoff in einem Thermoformprozess, insbesondere Kunststofftiefziehprozess, bekannt. Das Werkzeug weist eine Positivform auf, umfassend einen Bodenabschnitt zur Ausbildung eines Behälterbodens, einen Seitenwandabschnitt zur Ausbildung einer materialeinheitlich mit dem Behälterboden ausgebildeten, umlaufenden Seitenwand, eine Wand zur Ausbildung eines über eine Außenkontur der Seitenwand des Behälters um eine gesamte Behälteraußenseite umlaufend vorstehenden, als Hohlprofil ausgebildeten Stapelrands, welcher zu einer Behälterinnenseite hin nach innen als offene Nut ausgebildet und vom Behälterboden beabstandet angeordnet ist. Die Wand ist in einer Formposition zur Formung des Behälters um eine gesamte Außenseite der Positivform umlaufend abragend angeordnet. Zwischen einer zu dem Bodenabschnitt gerichteten Wandseite und einem sich ausgehend von dieser Wandseite in Richtung des Bodenabschnitts verlaufenden Bereich des zugehörigen Seitenwandabschnitts ist ein Winkel ausgebildet, der kleiner als 90 ° ist. Die Wand ist von der Formposition in eine Entformposition bewegbar, in welcher ein Abstand eines in der Formposition abragenden Endes der Wand zu dem Seitenwandabschnitt verringert ist.

Der Erfindung liegt die Aufgabe zu Grunde, eine gegenüber dem Stand der Technik verbesserte Behälteranordnung und ein gegenüber dem Stand der Technik verbessertes Verfahren zu deren Herstellung anzugeben.

Die Aufgabe wird erfindungsgemäß gelöst durch eine Behälteranordnung mit den Merkmalen des Anspruchs 1 und ein Verfahren zur Herstellung einer Behälteranordnung mit den Merkmalen des Anspruchs 7.

Vorteilhafte Ausgestaltungen der Erfindung sind Gegenstand der Unteransprüche.

Eine erfindungsgemäße Behälteranordnung weist eine Anzahl von Behältern auf, d. h. mindestens einen Behälter, jedoch vorteilhafterweise mehrere Behälter, d. h. mindestens zwei oder mehr Behälter. Der jeweilige Behälter ist insbesondere ein Transportbehälter und/oder Lagerbehälter, insbesondere zum Transport und/oder zur Lagerung von Komponenten. Der jeweilige Behälter ist insbesondere aus Kunststoff ausgebildet, insbesondere in einem Thermoformprozess, insbesondere Kunststofftiefziehprozess.

Des Weiteren weist die Behälteranordnung vorteilhafterweise einen Behälterverschlussdeckel auf. Der Behälterverschlussdeckel ist insbesondere aus Kunststoff ausgebildet, insbesondere in einem Thermoformprozess, insbesondere Kunststofftiefziehprozess. Der Behälterverschlussdeckel ist insbesondere geschlossen ausgebildet, insbesondere mediendicht, insbesondere flüssigkeitsdicht.

Der jeweilige Behälter weist einen, insbesondere geschlossenen, Behälterboden auf, an den sich umlaufend eine Seitenwand anschließt, die in einem oberen Bereich umlaufend einen oberen Stapelrand und in einem unteren Bereich umlaufend einen unteren Stapelrand aufweist.

In der Seitenwand ist vorteilhafterweise ein Druckausgleichselement angeordnet, welches insbesondere eine Nässesperrmembran aufweist. Die Seitenwand ist mit Ausnahme einer Aufnahmeöffnung für das Druckausgleichselement vorteilhafterweise geschlossen ausgebildet, insbesondere mediendicht, insbesondere flüssigkeitsdicht. Die Aufnahmeöffnung in der Seitenwand ist durch das darin angeordnete Druckausgleichselement verschlossen, insbesondere abgedichtet verschlossen, so dass ein Druckausgleich über die Seitenwand nur durch das Druckausgleichselement hindurch erfolgen kann. Das Druckausgleichselement wird auch als Druckausgleichsventil bezeichnet.

Vorteilhafterweise ist an dem unteren Stapelrand umlaufend eine Behälterdichtung angeordnet. Vorteilhafterweise ist an dem Behälterverschlussdeckel umlaufend eine Deckeldichtung angeordnet. Die Deckeldichtung ist insbesondere an einer Unterseite des Behälterverschlussdeckels angeordnet. Sie ist insbesondere in einem umlaufenden Randbereich des Behälterverschlussdeckels, insbesondere der Unterseite des Behälterverschlussdeckels, angeordnet.

Die Behälterdichtung des jeweiligen Behälters ist insbesondere derart angeordnet und ausgebildet, dass bei zwei aufeinander gestapelten Behältern die Behälterdichtung des oberen Behälters dichtend am oberen Stapelrand des unteren Behälters anliegt. Sie liegt somit am oberen Stapelrand des unteren Behälters und am unteren Stapelrand des oberen Behälters an und dichtet dadurch eine obere Behälteröffnung eines Behälterinnenraums des unteren Behälters umlaufend ab. Diese Behälteröffnung des unteren Behälters ist somit durch den Behälterboden und die Behälterdichtung des oberen Behälters abgedichtet verschlossen. Der Behälterboden ist, wie bereits erwähnt, insbesondere geschlossen und somit mediendicht ausgebildet, insbesondere flüssigkeitsdicht.

Die Deckeldichtung des Behälterverschlussdeckels ist insbesondere derart angeordnet und ausgebildet, dass bei auf dem Behälter angeordnetem Behälterverschlussdeckel die Deckeldichtung dichtend am oberen Stapelrand des Behälters anliegt. Sie liegt somit am oberen Stapelrand des Behälters und am Behälterverschlussdeckel, insbesondere an dessen Unterseite, an und dichtet dadurch die obere Behälteröffnung des Behälterinnenraums des Behälters umlaufend ab. Die Behälteröffnung des Behälters ist somit durch den Behälterverschlussdeckel und die Deckeldichtung abgedichtet verschlossen.

Die Behälterdichtung des jeweiligen Behälters ist insbesondere aus einem PU-Schaum ausgebildet, auch als PUR-Schaum bezeichnet, insbesondere aus einem 2K-PU-Schaum. Die Deckeldichtung ist insbesondere aus einem PU-Schaum ausgebildet, auch als PUR-Schaum bezeichnet, insbesondere aus einem 2K-PU-Schaum. Die Abkürzung PU bedeutet Polyurethan. Die Abkürzung 2K bedeutet zwei Komponenten.

Die Nässesperrmembran des Druckausgleichselements ist insbesondere als eine mikroporöse Membran oder als eine hydrophile Membran ausgebildet. Die Nässesperrmembran, insbesondere die als mikroporöse Membran ausgebildete Nässesperrmembran, ist insbesondere aus gerecktem Polytetrafluorethylen ausgebildet, auch als expandiertes Polytetrafluorethylen (ePTFE) bezeichnet.

Es ist insbesondere vorgesehen, dass der Behälterverschlussdeckel Rastelemente aufweist, die ausgebildet sind zum Verrasten an einem Außenrand des oberen Stapelrandes bei auf dem Behälter angeordnetem Behälterverschlussdeckel. Die Rastelemente sind beispielsweise als Rastnasen ausgeformt, die umlaufend um einen Seitenrand des Behälterverschlussdeckels verteilt an diesem Seitenrand des Behälterverschlussdeckels ausgeformt sind. Dadurch wird insbesondere sichergestellt, dass die Deckeldichtung bei auf dem Behälter angeordnetem und mittels der Rastelemente am Behälter verrastetem Behälterverschlussdeckel mit einer vorgegebenen Presskraft dichtend gegen den oberen Stapelrand des Behälters gepresst wird, insbesondere auf vorgegebene Weise verpresst wird.

In einem erfindungsgemäßen Verfahren zur Herstellung der Behälteranordnung wird in die Seitenwand des jeweiligen Behälters die Aufnahmeöffnung für das Druckausgleichselement eingebracht, das Druckausgleichselement wird in der Aufnahmeöffnung angeordnet, vorteilhafterweise wird an dem unteren Stapelrand des jeweiligen Behälters umlaufend die Behälterdichtung angeordnet und vorteilhafterweise wird an dem Behälterverschlussdeckel umlaufend die Deckeldichtung angeordnet. Die beschriebenen Schritte können in der beschriebenen Reihenfolge oder in einer davon abweichenden Reihenfolge durchgeführt werden. Insbesondere kann das Einbringen der Aufnahmeöffnung und/oder das Anordnen des Druckausgleichselementes vor oder nach dem Anordnen der Behälterdichtung und/oder vor oder nach dem Anordnen der Deckeldichtung erfolgen und das Anordnen der Behälterdichtung kann vor oder nach dem Anordnen der Deckeldichtung erfolgen.

Das Druckausgleichselement ist insbesondere einfach zu installieren, ermöglicht eine schnelle und einfache Integration und stellt eine stabile Leistung sicher. Es ist insbesondere wasserdicht. Es stellt insbesondere einen IP66 / IP68-Schutz bereit. Es ist insbesondere sicher und zuverlässig. Es ist insbesondere luftdurchlässig. Es weist insbesondere eine Luftdurchlässigkeit von 350-4000 ml/min@0,07bar auf. Das Membranmaterial ist insbesondere ePTFE, wie oben bereits erwähnt. Es weist insbesondere oleophobe und/oder hydrophobe Membraneigenschaften auf. Das Druckausgleichselement weist insbesondere ein Gehäuse und ein Klemmmutter auf. Das Gehäuse ist insbesondere aus Kunststoff ausgebildet, insbesondere aus faserverstärktem, insbesondere glasfaserverstärktem, Kunststoff. Der Kunststoff ist insbesondere Polyamid. Das Gehäuse ist insbesondere aus PA66 und, insbesondere 25 %, Glasfaser ausgebildet. Die Klemmmutter ist insbesondere aus Kunststoff ausgebildet, insbesondere aus Polyamid, insbesondere aus PA66. Das Druckausgleichselement weist insbesondere eine Dichtung zur Abdichtung der Verbindung des Druckausgleichselementes mit der Seitenwand auf. Diese Dichtung ist insbesondere als ein O-Ring ausgebildet, insbesondere aus Kieselgel, insbesondere mit 60H Shorehärte A.

In einer Ausführungsform wird der jeweilige Behälter aus Kunststoff in einem Thermoformprozess, insbesondere Kunststofftiefziehprozess, ausgebildet, beispielsweise mittels des in der DE 10 2019 207 818 A1, insbesondere in deren Figurenbeschreibung und Figuren, beschriebenen Werkzeugs und/oder Verfahrens.

In einer Ausführungsform wird der Behälterverschlussdeckel aus Kunststoff in einem Thermoformprozess, insbesondere Kunststofftiefziehprozess, ausgebildet.

Die Aufnahmeöffnung wird beispielsweise während oder nach der Ausbildung des jeweiligen Behälters in dessen Seitenwand eingebracht. Das Einbringen nach der Ausbildung des jeweiligen Behälters kann beispielsweise durch Bohren oder Stanzen erfolgen.

Die Behälterdichtung wird auf dem jeweiligen Behälter insbesondere durch Aufbringen des PU-Schaums, insbesondere in Form einer Schaumraupe, ausgebildet. Der PU-Schaum zum Ausbilden der Behälterdichtung ist insbesondere ein additionsvernetzender 2-Komponenten PUR-Schaum. Er ist insbesondere ein mittels einer Misch- und Dosiermaschine direkt aufzutragender PUR-Werkstoff.

In einer möglichen Ausführungsform des jeweiligen Behälters weist der jeweilige Behälter am unteren Stapelrand eine, insbesondere umlaufend ausgebildete, Nut auf, wobei die Behälterdichtung in dieser Nut ausgebildet wird. Dadurch kann zum Ausbilden der Behälterdichtung der PUR-Werkstoff beispielsweise ein flüssiges Material sein, welches auf Bauteilen, insbesondere 2-D Bauteilen, mit Nut applizierbar ist.

Dieser PUR-Werkstoff weist insbesondere eine gemischtzellige Schaumstruktur auf. Er weist insbesondere eine verhältnismäßig geringere Stauchhärte als bei geschlossenzelligen Systemen auf. Er bedarf insbesondere keiner zusätzlichen Ofennachbehandlung zur Aushärtung, jedoch kann die Aushärtung beispielsweise mit Wärme beschleunigt werden. Er weist, insbesondere im ausgehärteten Zustand, insbesondere ein gutes Rückstellvermögen auf. Im ausgehärteten Zustand weist der PU-Schaum insbesondere eine Dichte von ca. 0,30 g/cm³, eine Oberflächenhärte (Shore 00) von ca. 66 und/oder eine Gebrauchstemperatur von -40 °C bis +80 °C, insbesondere kurzzeitig bis +160 °C, auf. Eine Aushärtezeit des PU-Schaums beträgt beispielsweise eine Stunde bis 12 Stunden. Eine A-Komponente des Rohprodukts, d. h. vor dem Aushärten des PU-Schaums, weist beispielsweise eine Dichte von ca. 1,17 g/cm³ und/oder eine Viskosität von ca. 4000 mPa*s auf.

Die Deckeldichtung wird auf dem Behälterverschlussdeckel insbesondere durch Aufbringen des PU-Schaums, insbesondere in Form einer Schaumraupe, ausgebildet. Der PU-Schaum zum Ausbilden der Deckeldichtung ist insbesondere ein additionsvernetzender 2-Komponenten PUR-Weichschaum. Er ist insbesondere ein pastöses (thixotropes) Material, welches auf 2-D und 3-D Bauteilen mit oder insbesondere auch ohne Nut applizierbar ist. Er weist insbesondere eine gemischtzellige Schaumstruktur auf. Er bedarf insbesondere keiner zusätzlichen Ofennachbehandlung zur Aushärtung, jedoch kann die Aushärtung beispielsweise mit Wärme beschleunigt werden. Er weist, insbesondere im ausgehärteten Zustand, insbesondere ein gutes Rückstellvermögen und eine geringe Wasseraufnahme auf. Im ausgehärteten Zustand weist der PU-Schaum insbesondere eine Dichte von 0,22 bis 0,36 g/cm³, eine Oberflächenhärte (Shore 00) von ca. 46 bis 65 und/oder eine Gebrauchstemperatur von -40 °C bis +80 °C, insbesondere kurzzeitig bis +160 °C, auf. Eine Aushärtezeit des PU-Schaums beträgt beispielsweise eine Stunde bis 12 Stunden. Eine A-Komponente des Rohprodukts, d. h. vor dem Aushärten des PU-Schaums, weist beispielsweise eine Dichte von 1,00 bis 1,06 g/cm³ und/oder eine Viskosität von 35000 bis 55000 mPa*s auf.

Beispielsweise weist der Behälterverschlussdeckel keine Nut für die Deckeldichtung auf, sondern eine flache Oberfläche, auf welcher die Deckeldichtung angebracht wird. Daher wird als PU-Schaum insbesondere das pastöse (thixotrope) Material verwendet. Wenn der Behälterverschlussdeckel eine Nut für die Deckeldichtung aufweist, kann beispielsweise auch das oben zur Ausbildung der Behälterdichtung verwendete Material für die Ausbildung der Deckeldichtung verwendet werden. Ebenso kann beispielsweise, wenn der jeweilige Behälter keine Nut für die Behälterdichtung aufweist, das oben zur Ausbildung der Deckeldichtung verwendete Material für die Ausbildung der Behälterdichtung verwendet werden.

Das Aufbringen der Behälterdichtung und/oder der Deckeldichtung, insbesondere als Schaumraupe, erfolgt insbesondere mit dem FIPFG-Verfahren (Formed-In-Place-Foam-Gaskets). Der Auftrag der Behälterdichtung und/oder der Deckeldichtung erfolgt insbesondere "in situ", das zweikomponentige Material wird direkt auf das Bauteil an dem Ort aufgetragen, an dem die Dichtung benötigt wird. Anschließend härtet die Behälterdichtung bzw. Deckeldichtung vorteilhafterweise bei Raumtemperatur aus.

Die Ausbildung der Behälterdichtung und/oder der Deckeldichtung aus PU-Schaum ist besonders vorteilhaft, da sie durch ihre Ausbildung auf einfache Weise an die Form des jeweiligen Bauteils, hier des jeweiligen Behälters bzw. des Behälterverschlussdeckels, angepasst werden können, unverlierbar automatisiert aufgetragen werden können, ohne zusätzliches Klebeband haften, ein Start- und Endpunkt der Schaumraupe dank Überlappung ineinander übergehen, so dass keine nachteiligen Kopplungsstellen und keine offenen Stoßstellen oder Einschnitte entstehen, Parameter wie Breite, Höhe und Härte der Dichtung durch deren Ausbildung beeinflusst werden können und geringere Fehlermöglichkeiten im Vergleich zu einem manuellen Auftrag bestehen.

Des Weiteren weist die Ausbildung der Behälterdichtung und/oder der Deckeldichtung aus PU-Schaum eine hohe Wirtschaftlichkeit auf, denn dies ist im Vergleich zu manuell eingelegten Dichtungen qualitativ hochwertiger und wesentlich günstiger.

Die Ausbildung der Behälterdichtung und/oder der Deckeldichtung aus PU-Schaum ermöglicht zudem kurze Taktzeiten und dadurch eine effiziente automatisierte Produktion.

Zudem resultiert aus der Ausbildung der Behälterdichtung und/oder der Deckeldichtung aus PU-Schaum eine geringe Lagerhaltung und im Vergleich zu gestanzten oder geschnittenen Dichtungen entsteht nahezu kein Abfall.

Die Ausbildung der Behälterdichtung und/oder der Deckeldichtung aus PU-Schaum ist zudem umweltfreundlich, da eine Spülung des Aufbringsystems mit Wasser möglich ist, da eine klebstofffreie Aufbringung möglich ist und da ein Aushärten bei Raumtemperatur nach rund vier bis 20 Minuten ohne Ofen möglich ist.

Die hier beschriebene Lösung der Behälteranordnung und des Verfahrens zu deren Herstellung ermöglicht insbesondere eine Vermeidung von Feuchtigkeitsschäden bei in dem jeweiligen Behälter gelagerten und/oder transportierten Komponenten. Die beschriebene Lösung ermöglicht somit insbesondere einen Transport und/oder eine Lagerung von korrosionsgefährdeten Komponenten, zum Beispiel von unbehandelten Metallen und/oder von Elektro- und/oder Elektronikteilen und Baugruppen.

Durch die hier beschriebene Lösung wird insbesondere das Problem gelöst, dass sich in aus dem Stand der Technik bekannten Transportbehältern bei wechselnden Temperaturen bei der Lagerung und dem Transport Kondensat bzw. Wasserdampf bildet, wodurch Korrosion an Metallen und Schäden an elektronischen Komponenten auftreten können.

Dies wird durch die hier beschriebene Lösung, insbesondere durch die Abdichtung eines Behälterinnenraums des jeweiligen Behälters, entweder mittels eines darauf gestapelten weiteren Behälters und dessen Behälterdichtung oder mittels des Behälterverschlussdeckels und dessen Deckeldichtung sowie durch das Druckausgleichselement des jeweiligen Behälters gelöst. Sowohl dieses Abdichten als auch das Druckausgleichselement verhindern das Eindringen von Feuchtigkeit in den Behälterinnenraum des jeweiligen Behälters, wobei das Druckausgleichselement zudem das Entweichen von Feuchtigkeit, insbesondere Wasserdampf, aus dem Behälterinnenraum des jeweiligen Behälters ermöglicht.

Bei der hier beschriebenen Lösung ist somit kein zusätzlicher chemischer Schutz (VCI-Volatile Korrosion Inhibitor) in Form von beschichteter Folie, Papier, Kapseln etc. mehr notwendig. Daraus resultieren geringere Kosten und eine einfachere Handhabung und zudem weniger Abfall, da herkömmliche chemische Schutzkomponenten meist Einwegprodukte sind.

Diese Vorteile werden auf die oben beschriebene Weise erreicht, zusammengefasst insbesondere, indem, insbesondere im Bodenbereich des jeweiligen Behälters, d. h. insbesondere am unteren Stapelrand, die Behälterdichtung eingebracht wird, die im Stapel mehrerer Behälter abdichtenden Kontakt zum oberen Stapelrand des darunter angeordneten anderen Behälters erhält und diesen, insbesondere dessen Behälterinnenraum, dadurch abdichtet. Das bedeutet, dass nicht jeder Behälter einen Behälterverschlussdeckel benötigt, sondern bei mehreren aufeinander gestapelten Behältern nur der oberste Behälter. Dieser oberste Behälter wird mit dem Behälterverschlussdeckel der beschriebenen Lösung versehen, der mit der Deckeldichtung versehen ist. Ein einzelner Behälter lässt sich ebenfalls mit diesem Behälterverschlussdeckel versehen und nutzen.

Zusätzlich ist der jeweilige Behälter mit dem Druckausgleichselement versehen, welches durch seine Membran, insbesondere Nässesperrmembran, Feuchtigkeit aus dem Behälter transportieren kann, aber vorteilhafterweise keine Feuchtigkeit von außen eindringen lässt. Vorteilhafterweise ist eine Größe des Druckausgleichselementes und/oder ein durch das Druckausgleichselement ermöglichter Durchsatz an ein Innenvolumen des jeweiligen Behälters angepasst, d. h. das für den jeweiligen Behälter verwendete Druckausgleichselement wird vorteilhafterweise entsprechend ausgewählt.

In einer vorteilhaften Ausführungsform, insbesondere wenn der jeweilige Behälter, wie oben bereits erwähnt, mittels des in der DE 10 2019 207 818 A1, insbesondere in deren Figurenbeschreibung und Figuren, beschriebenen Werkzeugs und/oder Verfahrens hergestellt ist oder wird, bevor die Aufnahmeöffnung in dessen Seitenwand eingebracht wird, das Druckausgleichselement angeordnet wird und die Behälterdichtung angeordnet wird, ist insbesondere vorgesehen, dass der Behälter den Behälterboden aufweist, dessen Eigenschaften vorteilhafterweise an ein zu transportierendes Gut angepasst sind. Beispielsweise ist der Behälterboden derart profiliert, dass dieser so genannte Nester aufweist, die ein rutschsicheres und beschädigungsfreies Transportieren der einzugebenden Komponenten ermöglichen. Der Behälterboden kann je nach Anforderung jedoch auch andere Eigenschaften aufweisen, beispielsweise eben ausgebildet sein.

An den Behälterboden schließt sich, insbesondere materialeinheitlich, umlaufend die Seitenwand an, die im oberen Bereich vorteilhafterweise in einen oberen Flansch endet, der um den ganzen Behälter umlaufend, insbesondere materialeinheitlich, ausgebildet ist und insbesondere über eine Außenseite der Seitenwand vorsteht. Dieser obere Flansch, insbesondere eine Oberseite des oberen Flansches, bildet vorteilhafterweise den oberen Stapelrand.

Im unteren Bereich des Behälters, insbesondere der Seitenwand, ist vorteilhafterweise ein unterer nach außen vorstehender Flansch ausgebildet, der vorteilhafterweise den unteren Stapelrand bildet. Der untere Flansch ist insbesondere als nach innen offene Nut ausgebildet und weist damit eine Oberseite und eine Unterseite auf, wobei insbesondere die Unterseite den unteren Stapelrand bildet. Vorteilhafterweise ist ein in diesem Bereich von dem unteren Flansch nach unten vorstehender Abschnitt der Seitenwand um ein Maß gegenüber der übrigen Seitenwand zurückversetzt, was mindestens einer Materialstärke bzw. Materialdicke der Seitenwand entspricht, jedoch in einer möglichen Ausgestaltung etwas größer ist, so dass ein problemloses verklemmungsfreies Stapeln mehrerer Behälter übereinander und abschnittsweise ineinander möglich ist.

Der untere Flansch ist an seiner Unterseite vorteilhafterweise gegenüber dem sich anschließenden Abschnitt der Seitenwand geneigt und schließt mit dem Abschnitt der Seitenwand einen Winkel ein, der kleiner als 90 ° ist.

Auch der obere Flansch schließt vorteilhafterweise einen Winkel ein, der kleiner als 90 ° ist, so dass sich beim Stapeln mehrerer Behälter der obere Flansch, d. h. der obere Stapelrand, des unteren Behälters mit seiner Oberseite unter die Unterseite des unteren Flansches, d. h. des unteren Stapelrandes, des direkt darüber angeordneten oberen Behälters legt, wobei die am unteren Stapelrand des oberen Behälters, insbesondere an der Unterseite des unteren Stapelrandes, angeordnete Behälterdichtung nun dichtend zwischen dem unteren Stapelrand des oberen Behälters und dem oberen Stapelrand des unteren Behälters angeordnet ist, wodurch ein staub- und feuchtigkeitsdichter Anschluss der einzelnen Behälter beim Stapeln erreicht wird.

Der jeweilige Behälter weist beispielsweise eine Länge von 400 mm, 600 mm oder 800 mm und/oder eine Breite von 300 mm, 400 mm oder 600 mm auf, insbesondere eine Länge von 400 mm und eine Breite von 300 mm oder eine Länge von 600 mm und eine Breite von 400 mm oder eine Länge von 800 mm und eine Breite von 600 mm.

Ausführungsbeispiele der Erfindung werden im Folgenden anhand von Zeichnungen näher erläutert. Darin zeigen:
- Figur 1: schematisch eine perspektivische Darstellung eines Behälters,
- Figur 2: schematisch den Behälter in einer Draufsicht von oben,
- Figur 3: schematisch eine Schnittdarstellung des Behälters entsprechend der Schnittebene III-III in Figur 2,
- Figur 4: schematisch eine Seitenansicht des Behälters,
- Figur 5: schematisch den Behälter in einer Draufsicht von unten, d. h. auf eine Unterseite des Behälters,
- Figur 6: schematisch eine Schnittdarstellung des Behälters entsprechend der Schnittebene VI-VI in Figur 5,
- Figur 7: schematisch eine Detailansicht des Detailausschnitts VII in Figur 6,
- Figur 8: schematisch eine Behälteranordnung mit zwei aufeinander gestapelten Behältern und einem Behälterverschlussdeckel auf dem oberen Behälter in einer Draufsicht von oben,
- Figur 9: schematisch eine Schnittdarstellung der Behälteranordnung entsprechend der Schnittebene IX-IX in Figur 8,
- Figur 10: schematisch eine Detailansicht des Detailausschnitts X in Figur 9,
- Figur 11: schematisch eine perspektivische Darstellung einer Behälteranordnung mit einem Behälter und einem Behälterverschlussdeckel auf dem Behälter,
- Figur 12: schematisch die Behälteranordnung aus Figur 11 in einer Draufsicht von oben,
- Figur 13: schematisch eine Schnittdarstellung der Behälteranordnung entsprechend der Schnittebene XIII-XIII in Figur 12,
- Figur 14: schematisch eine Detailansicht des Detailausschnitts XIV in Figur 13,
- Figur 15: schematisch die Behälteranordnung aus Figur 11 in einer weiteren Draufsicht von oben,
- Figur 16: schematisch eine Schnittdarstellung der Behälteranordnung entsprechend der Schnittebene XVI-XVI in Figur 15, und
- Figur 17: schematisch eine Detailansicht des Detailausschnitts XVII in Figur 16.

Einander entsprechende Teile sind in allen Figuren mit den gleichen Bezugszeichen versehen.

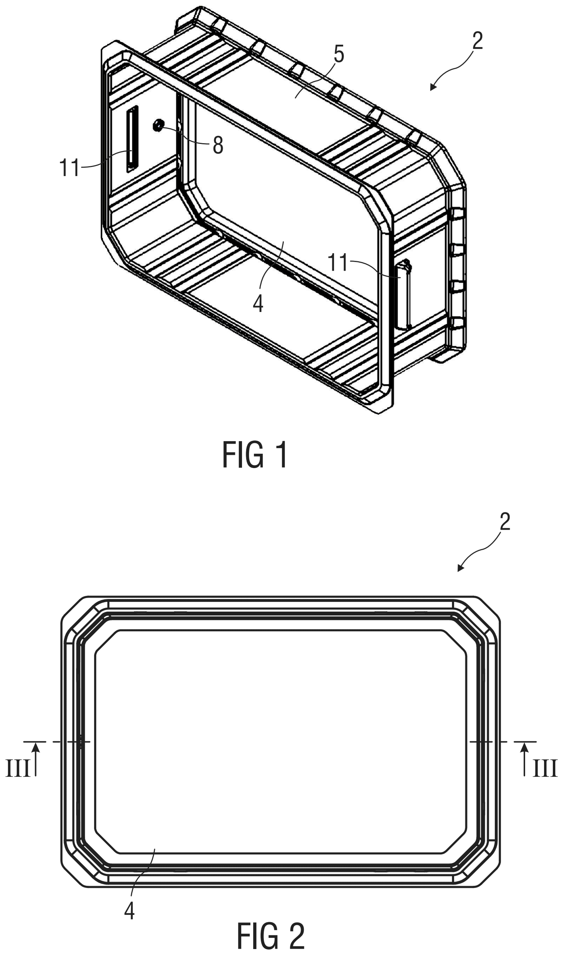

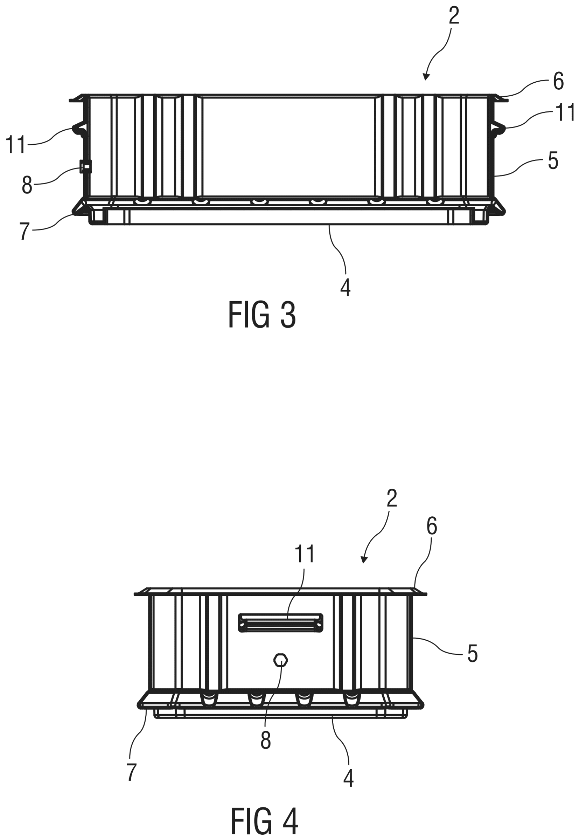

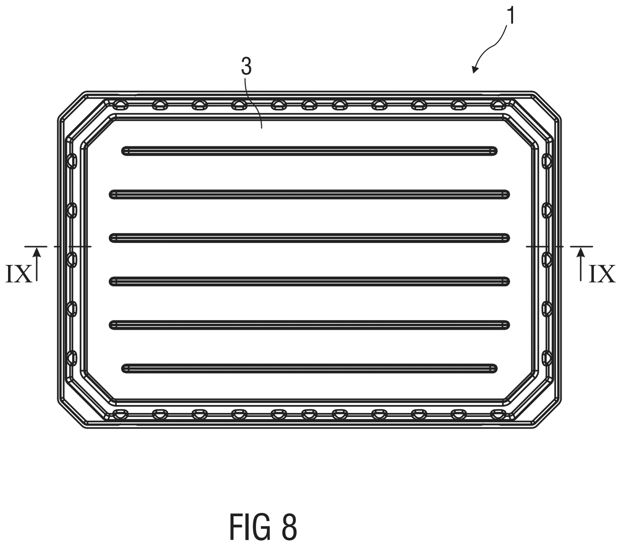

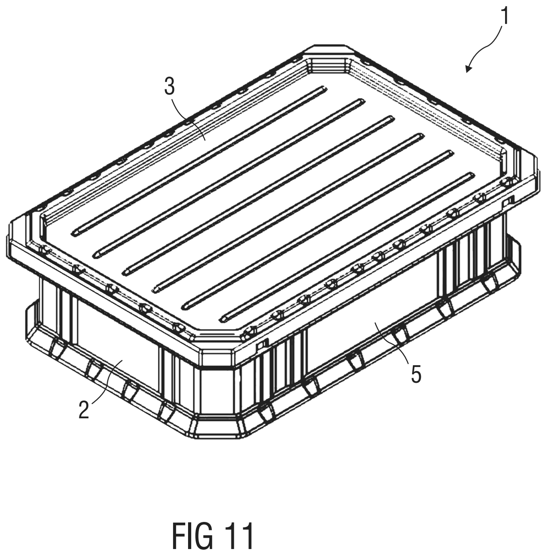

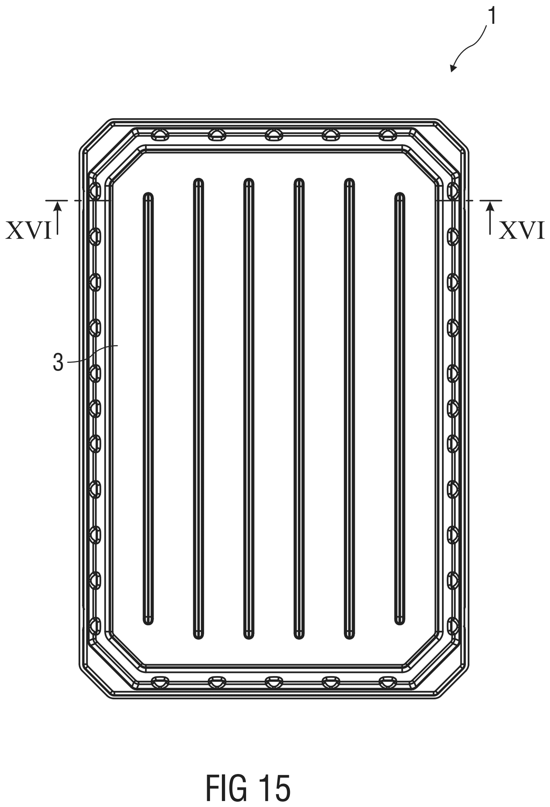

Anhand der Figuren 1 bis 17 werden im Folgenden eine Behälteranordnung 1 und ein Verfahren zu deren Herstellung beschrieben. Die Behälteranordnung 1 weist eine Anzahl von Behältern 2 auf, d. h. mindestens einen Behälter 2, wie beispielhaft in den Figuren 1 bis 7 und 11 bis 17 gezeigt, oder vorteilhafterweise mehrere Behälter 2, d. h. mindestens zwei Behälter 2, wie beispielhaft in den Figuren 8 bis 10 gezeigt, oder mehr als zwei Behälter 2.

Des Weiteren weist die Behälteranordnung 1 vorteilhafterweise einen Behälterverschlussdeckel 3 auf, wie beispielhaft in den Figuren 8 bis 17 gezeigt.

In den Figuren 1 bis 7 ist nur der Behälter 2 dargestellt und in den Figuren 8 bis 17 ist die jeweilige Ausführungsform der Behälteranordnung 1 mit einem Behälter 2 bzw. mit zwei Behältern 2 sowie mit dem Behälterverschlussdeckel 3 dargestellt.

Der jeweilige Behälter 2 ist insbesondere ein Transportbehälter und/oder Lagerbehälter, insbesondere zum Transport und/oder zur Lagerung von Komponenten. Der jeweilige Behälter 2 ist insbesondere aus Kunststoff ausgebildet, insbesondere in einem Thermoformprozess, insbesondere Kunststofftiefziehprozess.

Vorteilhafterweise ist auch der Behälterverschlussdeckel 3 aus Kunststoff ausgebildet, insbesondere in einem Thermoformprozess, insbesondere Kunststofftiefziehprozess. Der Behälterverschlussdeckel 3 ist insbesondere geschlossen ausgebildet, insbesondere mediendicht, insbesondere flüssigkeitsdicht.

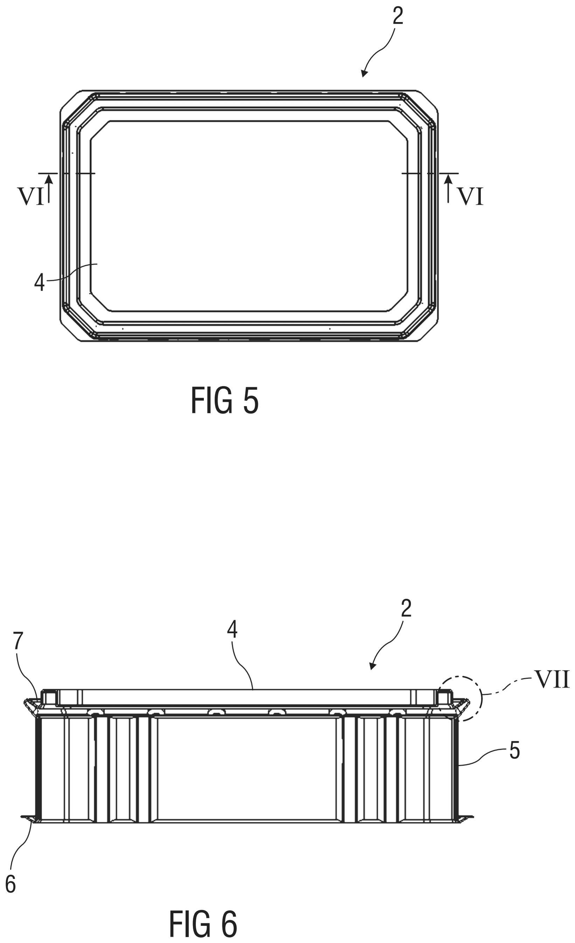

Der jeweilige Behälter 2 weist einen geschlossenen Behälterboden 4 auf. Die Figuren 1 und 2 zeigen eine Draufsicht auf eine Oberseite, d. h. auf eine Innenseite, des Behälterbodens 4. Figur 5 zeigt eine Draufsicht auf eine Unterseite, d. h. auf eine Außenseite, des Behälterbodens 4.

An den Behälterboden 4 schließt sich umlaufend eine Seitenwand 5 an, die in einem oberen Bereich umlaufend einen oberen Stapelrand 6 und in einem unteren Bereich umlaufend einen unteren Stapelrand 7 aufweist.

Wie in den Figuren 1, 3 und 4 gezeigt, ist in den dargestellten Ausführungsformen in der Seitenwand 5 ein Druckausgleichselement 8 angeordnet, welches insbesondere eine Nässesperrmembran aufweist. Die Seitenwand 5 ist mit Ausnahme einer Aufnahmeöffnung für das Druckausgleichselement 8 geschlossen ausgebildet, insbesondere mediendicht, insbesondere flüssigkeitsdicht. Die Aufnahmeöffnung in der Seitenwand 5 ist durch das darin angeordnete Druckausgleichselement 8 verschlossen, insbesondere abgedichtet verschlossen, so dass ein Druckausgleich über die Seitenwand 5 nur durch das Druckausgleichselement 8 hindurch erfolgen kann. Das Druckausgleichselement 8 wird auch als Druckausgleichsventil bezeichnet.

In den dargestellten Ausführungsformen sind in der Seitenwand 5 Handgriffe 11 ausgebildet, wie in den Figuren 1, 3, 4 und 9 gezeigt. Diese Handgriffe 11 sind derart ausgebildet, dass sie keine Öffnung in der Seitenwand 5 bilden, d. h. die Seitenwand 5 weist auch im Bereich der Handgriffe 11 keine Öffnung und keinen Durchbruch auf. Die Handgriffe 11 sind insbesondere einstückig und/oder einteilig mit der Seitenwand 5 ausgebildet. Sie bilden insbesondere einen integralen Bestandteil der Seitenwand 5.

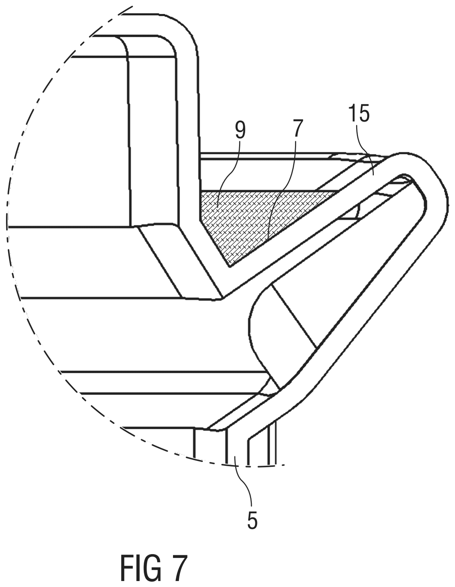

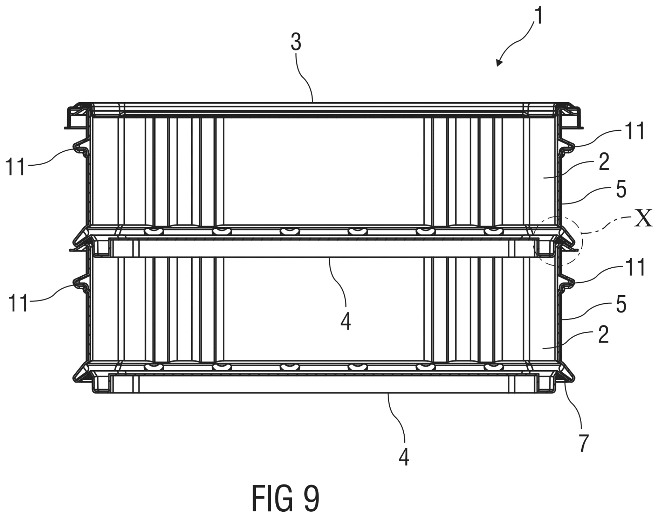

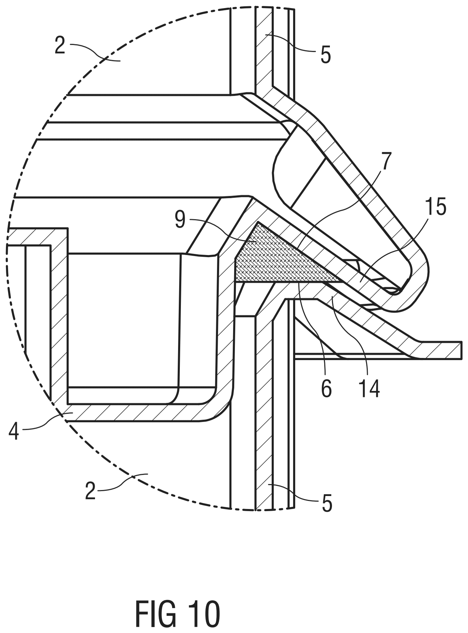

In den dargestellten Ausführungsformen ist an dem unteren Stapelrand 7 umlaufend eine Behälterdichtung 9 angeordnet, wie in Figur 7 in der Detailansicht des Detailausschnitts VII aus Figur 6 und in Figur 10 in der Detailansicht des Detailausschnitts X in Figur 9 gezeigt. Dabei ist der Behälter 2 in den Figuren 6 und 7 auf dem Kopf stehend dargestellt, d. h. mit einer oberen Behälteröffnung eines Behälterinnenraums nach unten, so dass der untere Stapelrand 7 oben dargestellt ist. Dies dient insbesondere der Verdeutlichung einer Ausformung des unteren Stapelrandes 7 in den dargestellten Ausführungsformen als eine Nut, in der die Behälterdichtung 9 angeordnet ist bzw. im Verfahren zur Herstellung der Behälteranordnung 1 auf eine im Folgenden noch beschriebene Weise ausgebildet wird.

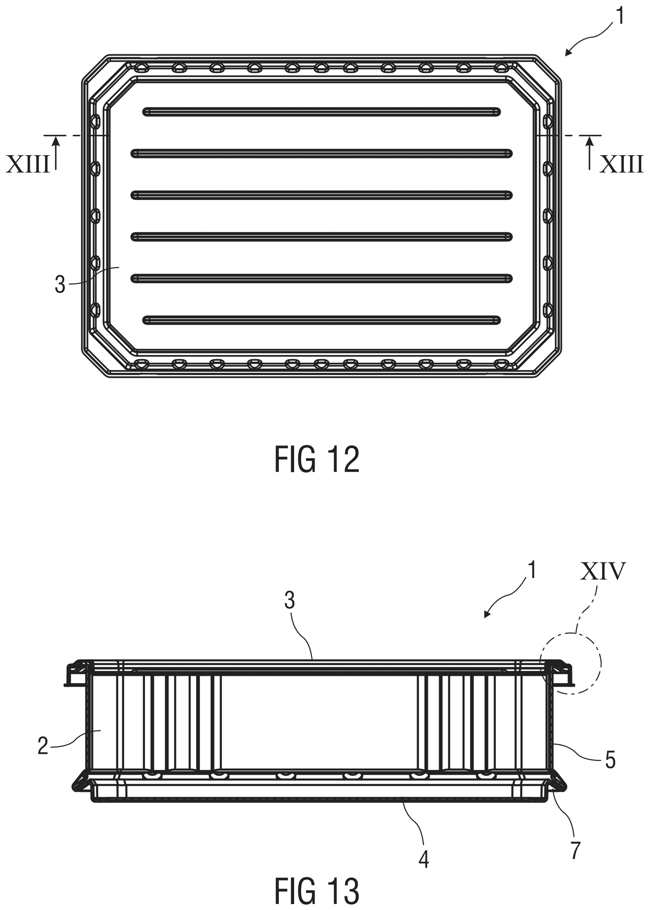

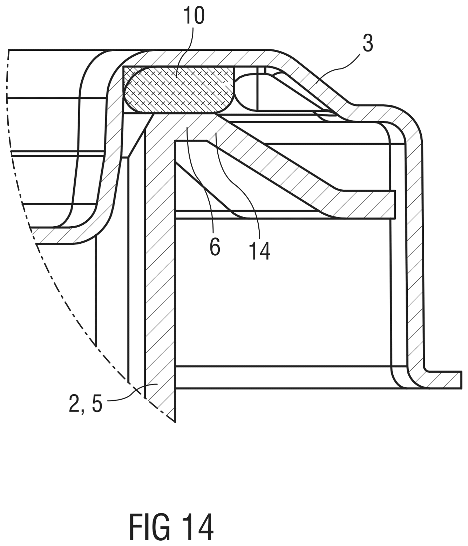

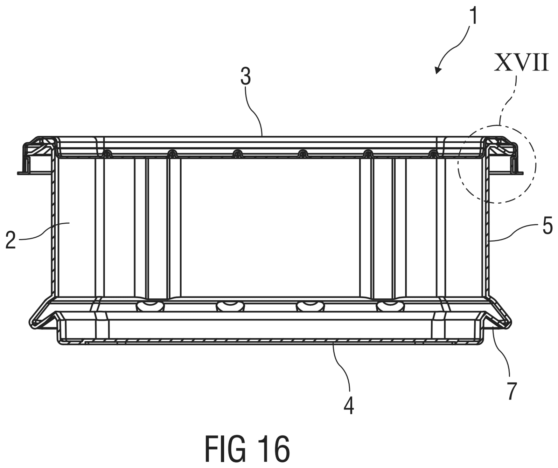

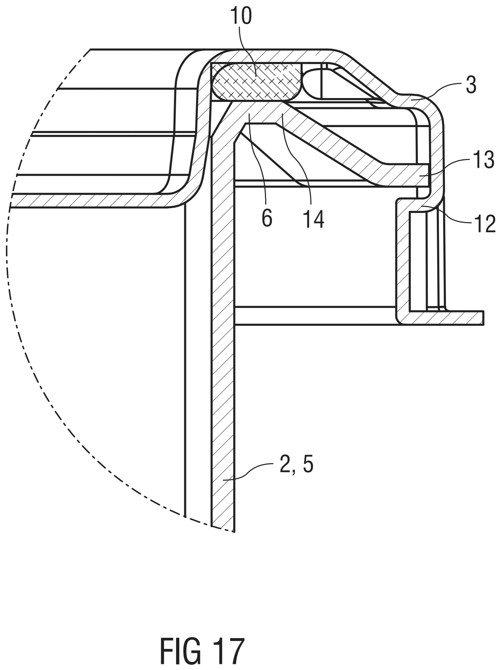

In den dargestellten Ausführungsformen ist an dem Behälterverschlussdeckel 3 umlaufend eine Deckeldichtung 10 angeordnet, wie in Figur 14 in der Detailansicht des Detailausschnitts XIV aus Figur 13 und in Figur 17 in der Detailansicht des Detailausschnitts XVII aus Figur 16 gezeigt. Die Deckeldichtung 10 ist in den dargestellten Ausführungsformen an einer Unterseite des Behälterverschlussdeckels 3 angeordnet, insbesondere in einem umlaufenden Randbereich des Behälterverschlussdeckels 3, insbesondere der Unterseite des Behälterverschlussdeckels 3.

Die Behälterdichtung 9 des jeweiligen Behälters 2 ist insbesondere derart angeordnet und ausgebildet, dass bei zwei aufeinander gestapelten Behältern 2 die Behälterdichtung 9 des oberen Behälters 2 dichtend am oberen Stapelrand 6 des unteren Behälters 2 anliegt, wie in den Figuren 9 und 10 gezeigt. Sie liegt somit am oberen Stapelrand 6 des unteren Behälters 2 und am unteren Stapelrand 7 des oberen Behälters 2 an und dichtet dadurch die Behälteröffnung des unteren Behälters 2 umlaufend ab. Diese Behälteröffnung des unteren Behälters 2 ist somit durch den Behälterboden 4 und die Behälterdichtung 9 des oberen Behälters 2 abgedichtet verschlossen.

Die Deckeldichtung 10 des Behälterverschlussdeckels 3 ist insbesondere derart angeordnet und ausgebildet, dass bei auf dem Behälter 2 angeordnetem Behälterverschlussdeckel 3 die Deckeldichtung 10 dichtend am oberen Stapelrand 6 des Behälters 2 anliegt. Sie liegt somit am oberen Stapelrand 6 des Behälters 2 und am Behälterverschlussdeckel 3, insbesondere an dessen Unterseite, an und dichtet dadurch die obere Behälteröffnung des Behälterinnenraums des Behälters 2 umlaufend ab. Die Behälteröffnung des Behälters 2 ist somit durch den Behälterverschlussdeckel 3 und die Deckeldichtung 10 abgedichtet verschlossen.

Die Behälterdichtung 9 des jeweiligen Behälters 2 ist insbesondere aus einem PU-Schaum ausgebildet, auch als PUR-Schaum bezeichnet, insbesondere aus einem 2K-PU-Schaum. Die Deckeldichtung 10 ist insbesondere aus einem PU-Schaum ausgebildet, auch als PUR-Schaum bezeichnet, insbesondere aus einem 2K-PU-Schaum. Die Abkürzung PU bedeutet Polyurethan. Die Abkürzung 2K bedeutet zwei Komponenten.

Die Nässesperrmembran des Druckausgleichselements 8 ist insbesondere als eine mikroporöse Membran oder als eine hydrophile Membran ausgebildet. Die Nässesperrmembran, insbesondere die als mikroporöse Membran ausgebildete Nässesperrmembran, ist insbesondere aus gerecktem Polytetrafluorethylen ausgebildet, auch als expandiertes Polytetrafluorethylen (ePTFE) bezeichnet.

Wie in Figur 17 in der Detailansicht des Detailausschnitts XVII aus Figur 16 gezeigt, weist der Behälterverschlussdeckel 3 vorteilhafterweise Rastelemente 12 auf, die ausgebildet sind zum Verrasten an einem Außenrand 13 des oberen Stapelrandes 6 bei auf dem Behälter 2 angeordnetem Behälterverschlussdeckel 3. Im dargestellten Beispiel sind diese Rastelemente 12 insbesondere als Rastnasen ausgeformt, die umlaufend um einen Seitenrand des Behälterverschlussdeckel 3 verteilt an diesem Seitenrand des Behälterverschlussdeckel 3 ausgeformt sind. Dadurch wird insbesondere sichergestellt, dass die Deckeldichtung 10 bei auf dem Behälter 2 angeordnetem und mittels der Rastelemente 12 am Behälter 2 verrastetem Behälterverschlussdeckel 3 mit einer vorgegebenen Presskraft dichtend gegen den oberen Stapelrand 6 des Behälters 2 gepresst wird, insbesondere auf vorgegebene Weise verpresst wird.

In einem Verfahren zur Herstellung der Behälteranordnung 1 wird in die Seitenwand 5 des jeweiligen Behälters 2 die Aufnahmeöffnung für das Druckausgleichselement 8 eingebracht, das Druckausgleichselement 8 wird in der Aufnahmeöffnung angeordnet, vorteilhafterweise wird an dem unteren Stapelrand 7 des jeweiligen Behälters 2 umlaufend die Behälterdichtung 9 angeordnet und vorteilhafterweise wird an dem Behälterverschlussdeckel 3 umlaufend die Deckeldichtung 10 angeordnet. Die beschriebenen Schritte können in der beschriebenen Reihenfolge oder in einer davon abweichenden Reihenfolge durchgeführt werden. Insbesondere kann das Einbringen der Aufnahmeöffnung und/oder das Anordnen des Druckausgleichselementes 8 vor oder nach dem Anordnen der Behälterdichtung 9 und/oder vor oder nach dem Anordnen der Deckeldichtung 10 erfolgen und das Anordnen der Behälterdichtung 9 kann vor oder nach dem Anordnen der Deckeldichtung 10 erfolgen.

In einer Ausführungsform wird der jeweilige Behälter 2 aus Kunststoff in einem Thermoformprozess, insbesondere Kunststofftiefziehprozess, ausgebildet, beispielsweise mittels des in der DE 10 2019 207 818 A1, insbesondere in deren Figurenbeschreibung und Figuren, beschriebenen Werkzeugs und/oder Verfahrens.

In einer Ausführungsform wird der Behälterverschlussdeckel 3 aus Kunststoff in einem Thermoformprozess, insbesondere Kunststofftiefziehprozess, ausgebildet.

Die Aufnahmeöffnung wird beispielsweise während oder nach der Ausbildung des jeweiligen Behälters 2 in dessen Seitenwand 5 eingebracht. Das Einbringen nach der Ausbildung des jeweiligen Behälters 2 kann beispielsweise durch Bohren oder Stanzen erfolgen.

Die Behälterdichtung 9 wird auf dem jeweiligen Behälter 2 insbesondere durch Aufbringen des PU-Schaums, insbesondere in Form einer Schaumraupe, ausgebildet. Der PU-Schaum zum Ausbilden der Behälterdichtung 9 ist insbesondere ein additionsvernetzender 2-Komponenten PUR-Schaum. Er ist insbesondere ein mittels einer Misch- und Dosiermaschine direkt aufzutragender PUR-Werkstoff.

In den dargestellten Ausführungsformen weist der jeweilige Behälter 2 am unteren Stapelrand 7 eine, insbesondere umlaufend ausgebildete, Nut auf, wobei die Behälterdichtung 9 in dieser Nut ausgebildet wird, wie insbesondere in den Figuren 7 und 10 gezeigt. Dadurch kann zum Ausbilden der Behälterdichtung 9 der PUR-Werkstoff beispielsweise ein flüssiges Material sein, welches auf Bauteilen mit Nut applizierbar ist. Dieser PUR-Werkstoff bedarf insbesondere keiner zusätzlichen Ofennachbehandlung zur Aushärtung, jedoch kann die Aushärtung beispielsweise mit Wärme beschleunigt werden.

Die Deckeldichtung 10 wird auf dem Behälterverschlussdeckel 3 insbesondere durch Aufbringen des PU-Schaums, insbesondere in Form einer Schaumraupe, ausgebildet. Der PU-Schaum zum Ausbilden der Deckeldichtung 10 ist insbesondere ein additionsvernetzender 2-Komponenten PUR-Weichschaum. Er ist insbesondere ein pastöses (thixotropes) Material, welches Bauteilen mit oder insbesondere auch ohne Nut applizierbar ist. Er bedarf insbesondere keiner zusätzlichen Ofennachbehandlung zur Aushärtung, jedoch kann die Aushärtung beispielsweise mit Wärme beschleunigt werden.

In den dargestellten Ausführungsformen weist der Behälterverschlussdeckel 3 keine Nut für die Deckeldichtung 10 auf, sondern eine flache Oberfläche, auf welcher die Deckeldichtung 10 angebracht wird. Daher wird als PU-Schaum insbesondere das pastöse (thixotrope) Material verwendet. Wenn der Behälterverschlussdeckel 3 eine Nut für die Deckeldichtung 10 aufweist, kann beispielsweise auch das oben zur Ausbildung der Behälterdichtung 9 verwendete Material für die Ausbildung der Deckeldichtung 10 verwendet werden. Ebenso kann beispielsweise, wenn der jeweilige Behälter 2 keine Nut für die Behälterdichtung 9 aufweist, das oben zur Ausbildung der Deckeldichtung 10 verwendete Material für die Ausbildung der Behälterdichtung 9 verwendet werden.

Das Aufbringen der Behälterdichtung 9 und/oder der Deckeldichtung 10, insbesondere als Schaumraupe, erfolgt insbesondere mit dem FIPFG-Verfahren (Formed-In-Place-Foam-Gaskets). Der Auftrag der Behälterdichtung 9 und/oder der Deckeldichtung 10 erfolgt insbesondere "in situ", das zweikomponentige Material wird direkt auf das Bauteil an dem Ort aufgetragen, an dem die Dichtung 9, 10 benötigt wird. Anschließend härtet die Behälterdichtung 9 bzw. Deckeldichtung 10 vorteilhafterweise bei Raumtemperatur aus.

Die hier beschriebene Lösung der Behälteranordnung 1 und des Verfahrens zu deren Herstellung ermöglicht insbesondere eine Vermeidung von Feuchtigkeitsschäden bei in dem jeweiligen Behälter 2 gelagerten und/oder transportierten Komponenten. Die beschriebene Lösung ermöglicht somit insbesondere einen Transport und/oder eine Lagerung von korrosionsgefährdeten Komponenten, zum Beispiel von unbehandelten Metallen und/oder von Elektro- und/oder Elektronikteilen und Baugruppen.

Durch die hier beschriebene Lösung wird insbesondere das Problem gelöst, dass sich in aus dem Stand der Technik bekannten Transportbehältern bei wechselnden Temperaturen bei der Lagerung und dem Transport Kondensat bzw. Wasserdampf bildet, wodurch Korrosion an Metallen und Schäden an elektronischen Komponenten auftreten können.

Dies wird durch die hier beschriebene Lösung, insbesondere durch die Abdichtung eines Behälterinnenraums des jeweiligen Behälters 2, entweder mittels eines darauf gestapelten weiteren Behälters 2 und dessen Behälterdichtung 9 oder mittels des Behälterverschlussdeckels 3 und dessen Deckeldichtung 10 sowie durch das Druckausgleichselement 8 des jeweiligen Behälters 2 gelöst. Sowohl dieses Abdichten als auch das Druckausgleichselement 8 verhindern das Eindringen von Feuchtigkeit in den Behälterinnenraum des jeweiligen Behälters 2, wobei das Druckausgleichselement 8 zudem das Entweichen von Feuchtigkeit, insbesondere Wasserdampf, aus dem Behälterinnenraum des jeweiligen Behälters 2 ermöglicht.

In einer vorteilhaften Ausführungsform, insbesondere wenn der jeweilige Behälter 2, wie oben bereits erwähnt, mittels des in der DE 10 2019 207 818 A1, insbesondere in deren Figurenbeschreibung und Figuren, beschriebenen Werkzeugs und/oder Verfahrens hergestellt ist oder wird, bevor die Aufnahmeöffnung in dessen Seitenwand 5 eingebracht wird, das Druckausgleichselement 8 angeordnet wird und die Behälterdichtung 9 angeordnet wird, ist insbesondere vorgesehen, dass der Behälter 2 den, insbesondere geschlossenen, Behälterboden 4 aufweist, dessen Eigenschaften vorteilhafterweise an ein zu transportierendes Gut angepasst sind. Beispielsweise ist der Behälterboden 4 derart profiliert, dass dieser so genannte Nester aufweist, die ein rutschsicheres und beschädigungsfreies Transportieren der einzugebenden Komponenten ermöglichen. Der Behälterboden 4 kann je nach Anforderung jedoch auch andere Eigenschaften aufweisen, beispielsweise eben ausgebildet sein.

An den Behälterboden 4 schließt sich, insbesondere materialeinheitlich, umlaufend die, insbesondere mit Ausnahme der Aufnahmeöffnung für das Druckausgleichselement 8, geschlossene Seitenwand 5 an, die im oberen Bereich vorteilhafterweise in einen oberen Flansch 14 endet, der um den ganzen Behälter 2 umlaufend, insbesondere materialeinheitlich, ausgebildet ist und insbesondere über eine Außenseite der Seitenwand 5 vorsteht. Dieser obere Flansch 14, insbesondere eine Oberseite des oberen Flansches 14, bildet vorteilhafterweise den oberen Stapelrand 6.

Im unteren Bereich des Behälters 2, insbesondere der Seitenwand 5, ist vorteilhafterweise ein unterer nach außen vorstehender Flansch 15 ausgebildet, der vorteilhafterweise den unteren Stapelrand 7 bildet. Der untere Flansch 15 ist insbesondere als nach innen offene Nut ausgebildet und weist damit eine Oberseite und eine Unterseite auf, wobei insbesondere die Unterseite den unteren Stapelrand 7 bildet. Vorteilhafterweise ist ein in diesem Bereich von dem unteren Flansch 15 nach unten vorstehender Abschnitt der Seitenwand 5 um ein Maß gegenüber der übrigen Seitenwand 5 zurückversetzt, was mindestens einer Materialstärke bzw. Materialdicke der Seitenwand 5 entspricht, jedoch in einer möglichen Ausgestaltung etwas größer ist, so dass ein problemloses verklemmungsfreies Stapeln mehrerer Behälter 2 übereinander und abschnittsweise ineinander möglich ist.

Beim Stapeln der Behälter 2 setzt sich somit der obere Behälter 2 mit seinem Behälterboden 4 und dem nach unten vorstehender Abschnitt der Seitenwand 5 in die Behälteröffnung des unteren Behälters 2 hinein, bis die Behälterdichtung 9 des oberen Behälters 2 auf dem oberen Stapelrand 6 des unteren Behälters 2 aufliegt. Durch ein Gewicht des oberen Behälters 2 und des gegebenenfalls darauf angeordneten Behälterverschlussdeckels 3 sowie gegebenenfalls im oberen Behälter 2 angeordneter Komponenten wird die Behälterdichtung 9 des oberen Behälters 2 an den oberen Stapelrand 6 des unteren Behälters 2 dichtend angepresst, vorteilhafterweise etwas verpresst, so dass die Behälteröffnung des unteren Behälters 2 abgedichtet verschlossen ist.

Der untere Flansch 15 ist an seiner Unterseite vorteilhafterweise gegenüber dem sich anschließenden Abschnitt der Seitenwand 5 geneigt und schließt mit dem Abschnitt der Seitenwand 5 einen Winkel ein, der kleiner als 90 ° ist, wie dargestellt. Wie beschrieben, bildet diese Unterseite des unteren Flansches 15 den unteren Stapelrand 7 des Behälters 2, wobei durch diese geneigte Ausbildung die oben bereits erwähnte Nut zur Aufnahme der Behälterdichtung 9 ausgebildet ist.

Auch der obere Flansch 14 schließt vorteilhafterweise einen Winkel ein, der kleiner als 90 ° ist, so dass sich beim Stapeln mehrerer Behälter 2 der obere Flansch 14, d. h. der obere Stapelrand 6, des unteren Behälters 2 mit seiner Oberseite unter die Unterseite des unteren Flansches 15, d. h. des unteren Stapelrandes 7, des direkt darüber angeordneten oberen Behälters 2 legt, wobei die am unteren Stapelrand 7 des oberen Behälters 2, insbesondere an der Unterseite des unteren Stapelrandes 7, angeordnete Behälterdichtung 9 nun dichtend zwischen dem unteren Stapelrand 7 des oberen Behälters 2 und dem oberen Stapelrand 6 des unteren Behälters 2 angeordnet ist, wodurch ein staub- und feuchtigkeitsdichter Anschluss der einzelnen Behälter 2 beim Stapeln erreicht wird.

### BEZUGSZEICHENLISTE

- 1: Behälteranordnung
- 2: Behälter
- 3: Behälterverschlussdeckel
- 4: Behälterboden
- 5: Seitenwand
- 6: oberer Stapelrand
- 7: unterer Stapelrand
- 8: Druckausgleichselement
- 9: Behälterdichtung
- 10: Deckeldichtung
- 11: Handgriff
- 12: Rastelement
- 13: Außenrand
- 14: oberer Flansch
- 15: unterer Flansch

## Patentansprüche

1. Behälteranordnung (1), aufweisend eine Anzahl von Behältern (2) und einen Behälterverschlussdeckel (3), wobei der jeweilige Behälter (2) einen Behälterboden (4) aufweist, an den sich umlaufend eine Seitenwand (5) anschließt, die in einem oberen Bereich umlaufend einen oberen Stapelrand (6) und in einem unteren Bereich umlaufend einen unteren Stapelrand (7) aufweist, wobei in der Seitenwand (5) ein Druckausgleichselement (8) mit einer Nässesperrmembran angeordnet ist, wobei an dem unteren Stapelrand (7) umlaufend eine Behälterdichtung (9) angeordnet ist und wobei an dem Behälterverschlussdeckel (3) umlaufend eine Deckeldichtung (10) angeordnet ist.

2. Behälteranordnung (1) nach Anspruch 1,
wobei die Behälterdichtung (9) des jeweiligen Behälters (2) derart angeordnet und ausgebildet ist, dass bei zwei aufeinander gestapelten Behältern (2) die Behälterdichtung (9) des oberen Behälters (2) dichtend am oberen Stapelrand (6) des unteren Behälters (2) anliegt.

3. Behälteranordnung (1) nach einem der vorhergehenden Ansprüche,
wobei die Deckeldichtung (10) des Behälterverschlussdeckels (3) derart angeordnet und ausgebildet ist, dass bei auf dem Behälter (2) angeordnetem Behälterverschlussdeckel (3) die Deckeldichtung (10) dichtend am oberen Stapelrand (6) des Behälters (2) anliegt.

4. Behälteranordnung (1) nach einem der vorhergehenden Ansprüche,
**dadurch gekennzeichnet, dass** die Behälterdichtung (9) und/oder die Deckeldichtung (10) aus einem PU-Schaum ausgebildet sind/ist.

5. Behälteranordnung (1) nach einem der vorhergehenden Ansprüche,
wobei die Nässesperrmembran des Druckausgleichselementes (8) aus gerecktem Polytetrafluorethylen ausgebildet ist.

6. Behälteranordnung (1) nach einem der vorhergehenden Ansprüche,
wobei der Behälterverschlussdeckel (3) Rastelemente (12) aufweist, die ausgebildet sind zum Verrasten an einem Außenrand (13) des oberen Stapelrandes (6) bei auf dem Behälter (2) angeordnetem Behälterverschlussdeckel (3).

7. Verfahren zur Herstellung einer Behälteranordnung (1) nach einem der vorhergehenden Ansprüche, wobei
- in die Seitenwand (5) des jeweiligen Behälters (2) eine Aufnahmeöffnung für das Druckausgleichselement (8) eingebracht wird,
- das Druckausgleichselement (8) in der Aufnahmeöffnung angeordnet wird,
- an dem unteren Stapelrand (7) des jeweiligen Behälters (2) umlaufend die Behälterdichtung (9) angeordnet wird, und
- an dem Behälterverschlussdeckel (3) umlaufend die Deckeldichtung (10) angeordnet wird.

8. Verfahren nach Anspruch 7,
wobei der jeweilige Behälter (2) und/oder der Behälterverschlussdeckel (3) jeweils aus Kunststoff in einem Thermoformprozess ausgebildet werden/wird.

9. Verfahren nach Anspruch 7 oder 8,
wobei die Aufnahmeöffnung während oder nach der Ausbildung des jeweiligen Behälters (2) in dessen Seitenwand (5) eingebracht wird.

10. Verfahren nach einem der Ansprüche 7 bis 9,
wobei die Behälterdichtung (9) auf dem jeweiligen Behälter (2) und/oder die Deckeldichtung (10) auf dem Behälterverschlussdeckel (3) durch Aufbringen eines PU-Schaums ausgebildet werden/wird.
